# EUROPEAN PATENT APPLICATION

(11) **EP 4 730 664 A1**
(43) Date of publication of application: **22.04.2026**
(21) Application number: 24206773.4
(22) Date of filing: 15.10.2024
(51) Int. Cl.: H04B 5/26, H01Q 7/00, H02J 50/12, H04B 5/79

(54) **COMMUNICATION ANTENNA**

(71) Applicant: NXP B.V., 5656 AG Eindhoven (NL)
(72) Inventor: HASLINGER, Dorian, 8044 Graz (AT); NEOPHYTOU, Kyriakos, 8020 Graz (AT); LIEBISCH, Gregor, 8010 Graz (AT)
(74) Representative: Hardingham, Christopher Mark

(57) **Abstract**

A communication antenna comprising an inner antenna loop extending within a plane, configured to allow a current to flow along a first inner wire and a second inner wire. The communication antenna also comprises, an outer antenna loop extending around the inner antenna loop within the plane, configured to allow a current to flow along an outer wire. The communication antenna further comprises, a plurality of transistors configured to be controlled by a first control voltage and a second control voltage selectively to switch between, a first state which produces current flow in the first inner wire that is in phase with the current in the outer wire; and a second state which produces current flow in the second inner wire that is out of phase with the current in the outer wire. The plurality of transistors is coupled between the outer antenna loop and the inner antenna loop.

## Description

### FIELD OF INVENTION

This invention relates to a communication antenna, to an NFC antenna comprising the communication antenna and to a wireless charging unit comprising the communication antenna.

### BACKGROUND OF THE INVENTION

In modern implementations of NFC antennas larger aperture sizes are required for various different applications, for example wireless charging with NFC. Usually, antennas with one or more loops suffer from a weak magnetic field in regions across the antenna depending on the design. The weak magnetic field is a result of destructive interference between the loop which leads to that antenna not being able to communicate with the receiver, such as a phone.

### SUMMARY OF THE INVENTION

Aspects of the invention are set out in the accompanying independent and dependent claims. Combinations of features from the dependent claims may be combined with features of the independent claims as appropriate and not merely as explicitly set out in the claims.

According to an aspect, there is provided a communication antenna comprising an inner antenna loop extending within a plane, configured to allow a current to flow along a first inner wire and a second inner wire. The communication antenna also comprises, an outer antenna loop extending around the inner antenna loop within the plane, configured to allow a current to flow along an outer wire. The communication antenna further comprises, a plurality of transistors configured to be controlled by a first control voltage and a second control voltage selectively to switch between, a first state configured to produce current flow in the first inner wire that is in phase with the current in the outer wire; and a second state configured to produce current flow in the second inner wire that is out of phase with the current in the outer wire. The plurality of transistors is coupled between the outer antenna loop and the inner antenna loop.

According to embodiments, a communication antenna is provided that switches the direction of current flow in the inner antenna loop, to change the area of constructive interference in the communication antenna. Using this arrangement, a uniform magnetic field can be achieved across the communication antenna, providing better coverage of the communication antenna signal, as there are far smaller variations or "blind spots" in the magnetic field.

In one embodiment, the plurality of transistors are arranged in pairs. Each pair comprises a first transistor that is connected in series with a second transistor. A first pair is configured to turn on during the second state, and the first pair is coupled in series with a first input and a first output, and the second control voltage is coupled to a gate terminal of each transistor of the first pair. A second pair is configured to turn on during the second state, and the second pair is coupled in series with a second input and a second output, and the second control voltage is coupled to a gate terminal of each transistor of the second pair. A third pair is configured to turn on during the first state, and the third pair is coupled in series with a first input and a third output, and the first control voltage is coupled to a gate terminal of each transistor of the third pair. A fourth pair is configured to turn on during the first state, and the fourth pair is coupled in series with a second input and a fourth output, and the first control voltage is coupled to a gate terminal of each transistor of the fourth pair. The effect of this arrangement of the plurality of transistors is to enable the switching on or the switching off of the various transistor pairs. The resulting current flow in the circuit is directed along different paths, either in phase with the outer wire current flow or out of phase with the outer wire current flow.

In one embodiment, the second inner wire comprises a first inductor coupled to the first output and a second inductor coupled to the second output, for adjusting the inductance of the second inner wire in the second state, so it is the same as the inductance of the first inner wire in the first state. The effect of the first inductor and second inductor is to enable full performance of the communication antenna, as the inductance of the first inner wire and the inductance of the second inner wire are the same, so the magnetic field will have the same strength. Hence a single matching network topology can be used for both states.

In one embodiment, the first inner wire follows an opposite path around the inner antenna loop, to the second inner wire.

According to an embodiment, the first control voltage switches between a first value in the first state and a second value in the second state, and the second control voltage switches between said second value in the first state and said first value in the second state.

In one embodiment, the first value is for switching on the transistors of a given pair of transistors when applied to the gates of those transistors, and the second value is for switching off the transistors of a given pair of transistors when applied to the gates of those transistors.

In one embodiment, in the first state a magnetic field within the inner antenna loop is stronger than a magnetic field between the outer antenna loop and inner antenna loop.

In one embodiment, in the second state the magnetic field between the outer antenna loop and the inner antenna loop is stronger than the magnetic field within the inner antenna loop.

According to an embodiment, the plurality of transistors are negative-channel metal-oxide-semiconductor field effect transistors, NMOS.

In one embodiment, the inner antenna loop comprises at least one further inner antenna loop.

In one embodiment, the outer antenna loop comprises at least one further outer antenna loop.

According to another aspect, there is provided a Near Field Communication, NFC, antenna, including a communication antenna of the kind set out above.

According to a further aspect, there is provided a wireless charging unit, , including a communication antenna of the kind set out above.

### BRIEF DESCRIPTION OF DRAWINGS

Embodiments of this disclosure will be described hereinafter, by way of example only, with reference to the accompanying drawings in which like reference signs relate to like elements and in which:
Figure 1 shows a communication antenna, according to an embodiment;
Figure 2 shows a view of the switching circuit of the communication antenna of Figure 1;
Figure 3 shows another view of the communication antenna of Figure 1; and
Figure 4 shows another view of the communication antenna of Figure 1.

### DETAILED DESCRIPTION

Embodiments of the present disclosure are described in the following with reference to the accompanying drawings.

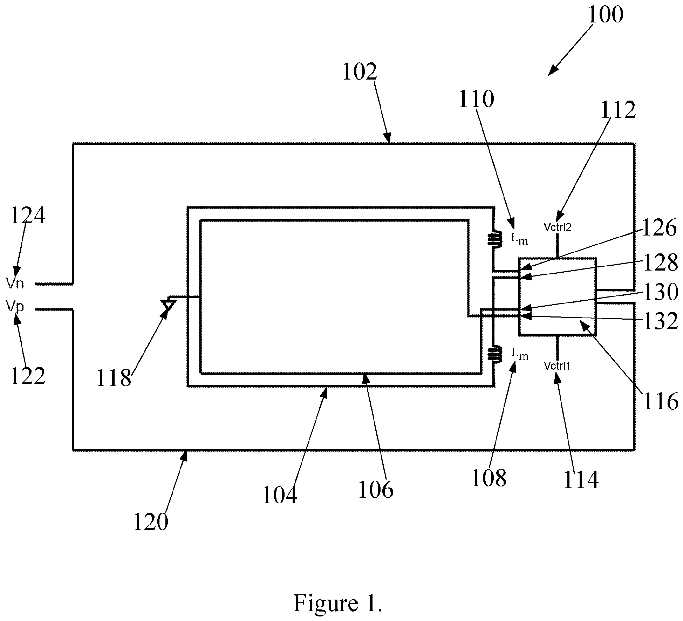

Figure 1 illustrates a communication antenna 100 in accordance with an embodiment. The communication antenna 100 includes an outer antenna loop, which includes at least one outer wire 102/120. In the present example, the outer wire 102 may be coupled between a first port 124 and a first input of a switching circuit 116. On the other hand, the outer wire 120 may be coupled between a second port 122 and a second input of the switching circuit 116. The outer antenna loop is operable to allow current to pass through the at least one outer wire 102/120, to produce a magnetic field for transmitting signals to external devices. The outer antenna loop may comprise a further outer antenna loop, for increasing the strength of the magnetic field in regions not taken up by the outer antenna loop.

As shown in Figure 1, the communication antenna 100 includes an inner antenna loop, which includes a first inner wire 106 and a second inner wire 104. The inner antenna loop extends within the outer antenna loop, in such a way that the inner antenna loop may define a smaller area compared with the area of the outer antenna loop. The first inner wire 106 may be coupled to a third output 130 and a fourth output 132 of the switching circuit 116. Furthermore, the second inner wire 104 may be coupled to a first output 126 and a second output 128 of the switching circuit 116. The first inner wire 106 follows an opposite path around the inner antenna loop, to the second inner wire 104, so that when a current flows through the first inner wire 106 it will travel in the opposite direction around the inner antenna loop, than the direction taken by current in the second inner wire 106. The first inner wire 106 and/or the second inner wire 104 are operable to allow current to pass through them to produce a magnetic field for transmitting signals to external devices. The inner antenna loop may comprise a further inner antenna loop, for increasing the strength of the magnetic field in regions not taken up by the inner antenna loop.

In the present embodiment, the switching circuit 116 is operable to selectively switch between directing current flow through the first inner wire 106 or directing current flow through the second inner wire 104. The switching circuit 116 is controlled by a first control voltage 114 and a second control voltage 112, which may be operable to switch between a first value and a second value, alternatively. When the first control voltage 114 has the first value, the second control voltage 112 has the second value and vice versa. The first value and the second value are chosen such that they are suitable for opening and closing the gates of a plurality of transistors 204/206/208/210 in the switching circuit 116. For example, producing current flow in the first inner wire 106 may occur when the first control voltage 114 has the first value the second control voltage 112 has the second value. The alternative to this, for producing current flow in the second inner wire 104 may be when the second control voltage 112 has the first value the first control voltage 114 has the second value. The first control voltage 114 and the second control voltage 112 may be operable to switch between the first value and the second value rapidly.

In this embodiment, the second inner wire 104 includes a first inductor 110 and a second inductor 108. The first inductor 110 may be coupled to the first output 126 and the second inductor 108 may be coupled to the second output 128. The first inductor 110 and the second inductor 108 may be operable to adjust the inductance of the second inner wire 104 compared with the inductance of the first inner wire 106, to match it. This can allow a single matching network topology to be used for the communication antenna 100, when either directing current flow in the first inner wire 106 or the second inner wire 104.

In the present embodiment, the communication antenna 100 further includes a ground wire 118 which is coupled to the first inner wire 106 and the second inner wire 104. The function of the ground wire 118 may be to secure a route for current to flow in the case of a short circuit.

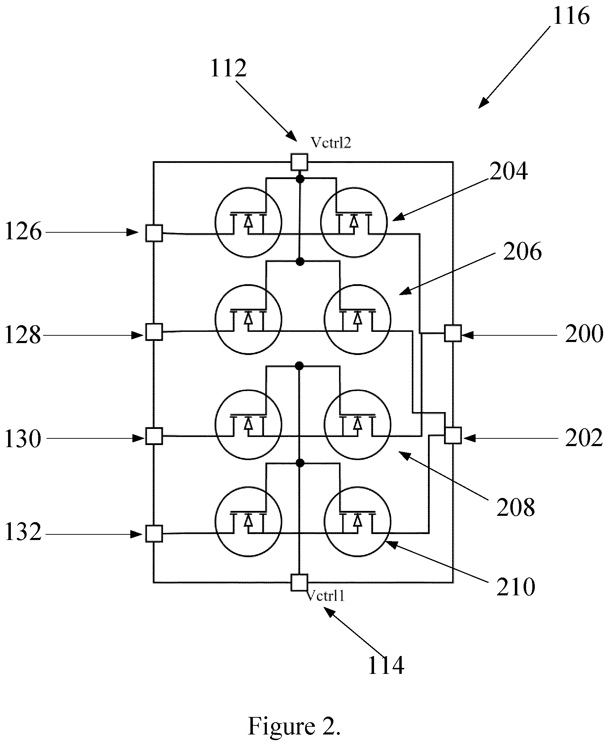

Figure 2 illustrate an embodiment of the switching circuit 116 of the communication antenna 100 shown in Figure 1. The switching circuit 116 may include a plurality of transistors 204/206/208/210 that are arranged in pairs. Each pair may include a first transistor that is coupled in series with a second transistor. The plurality of transistors may be arranged in a first pair 204, a second pair 206, a third pair 208 and a fourth pair 210. As noted above, the switching circuit 116 is operable to selectively switch between directing current flow into the first inner wire 106 or directing current flow into the second inner wire 104, and may use the plurality of transistors 204/206/208/210, the first control voltage 114 and the second control voltage 112 to perform the selective switching.

In this embodiment, the first pair 204 may include a first transistor and a second transistor, with a first terminal of the first transistor coupled to the first output 126, a second terminal of the first transistor coupled with a first terminal of the second transistor and a gate terminal of the first transistor coupled to a node of the first pair 204. The second transistor may include a second terminal that is coupled with the first input 200 and a gate terminal of the second transistor may be coupled to the node of the first pair 204.

The second pair 206 may include a first transistor and a second transistor, with a first terminal of the first transistor coupled to the second output 128, a second terminal of the first transistor coupled with a first terminal of the second transistor and a gate terminal of the first transistor coupled to a node of the second pair 206. The second transistor may include a second terminal that is coupled with the first input 200 and a gate terminal of the second transistor may be coupled to the node of the second pair 206.

The second control voltage 112 may be coupled to the node of the first pair 204 and to the node of the second pair 206, for controlling the current flow through the first pair 204 and the second pair 206.

In this embodiment, the third pair 208 may include a first transistor and a second transistor, with a first terminal of the first transistor coupled to the third output 130, a second terminal of the first transistor coupled with a first terminal of the second transistor and a gate terminal of the first transistor coupled to a node of the third pair 208. The second transistor may include a second terminal that is coupled with the second input 202 and a gate terminal of the second transistor may be coupled to the node of the third pair 208.

The fourth pair 210 may include a first transistor and a second transistor, with a first terminal of the first transistor coupled to the fourth output 132, a second terminal of the first transistor coupled with a first terminal of the second transistor and a gate terminal of the first transistor coupled to a node of the fourth pair 210. The second transistor may include a second terminal that is coupled with the second input 202 and a gate terminal of the second transistor may be coupled to the node of the fourth pair 210.

The first control voltage 114 may be coupled to the node of the third pair 208 and to the node of the fourth pair 210, for controlling the current flow through the third pair 208 and the fourth pair 210.

In the present embodiment, the plurality of transistors 204/206/208/210 may be negative-channel metal-oxide-semiconductor field effect transistors, NMOS. Therefore, when a *"high"* level voltage is applied to the gate terminal of the plurality of transistors 204/206/208/210 they may be switched on and when a "*low*" level voltage is applied to the gate terminal of the plurality of transistors 204/206/208/210 they may be switched off. For example, when the first control voltage 114 has a *"high"* level voltage the third pair 208 and the fourth pair 210 may be switched on. Another example may be, when the second control voltage 112 has a *"high"* level voltage the first pair 204 and the second pair 206 may be switched on.

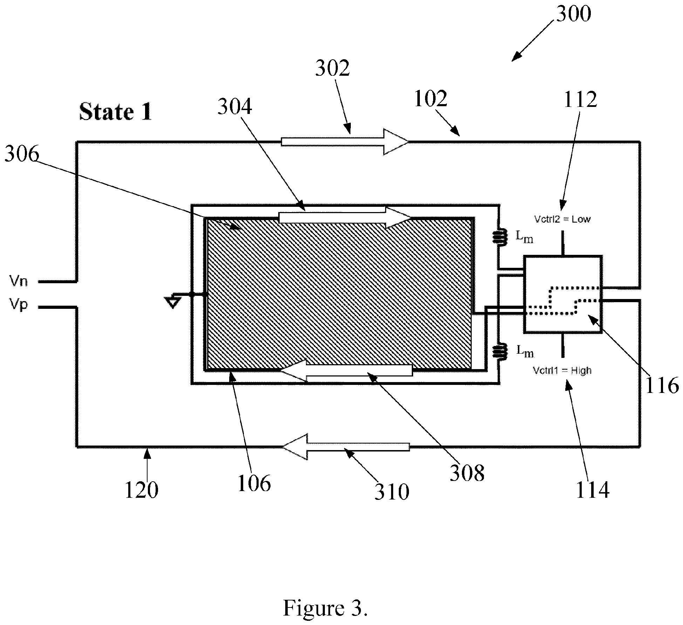

Figure 3 illustrates the communication antenna 100 in a first state 300 in accordance with an embodiment. The first state 300 may occur when the first control voltage 114 has the first value, which may be a *"high"* level voltage, and when the second control voltage 112 has the second value, which may be a *"low"* level voltage. In the first state 300, current may pass along the outer wire 102 in a first outer direction 302 to the switching circuit 116. As the first control voltage 114 has a *"high"* level voltage, the third pair 208 and fourth pair 210 will be switched on, see Fig. 2. The current may then pass around the first inner wire 106 in a first inner direction 308/304 and then the current may flow back into the switching circuit 116 and travel along the outer wire 120 in a second outer direction 310. It may be noted that, the first outer direction 302 and the second outer direction 310 are in phase with the first inner direction 304/308, meaning that the current in the outer wire 102/120 is flowing in the same direction as the current in the first inner wire 106. As both wires have a current flowing through them, this may result in a magnetic field being produced across the first state 300. The magnetic field in the first state 300 can be used to transmit signals to other devices.

In the present embodiment, the magnetic field in the first state 300 may be strongest within the active area 306, due to this region having *"high"* constructive interference between the magnetic field of the first inner wire 106 and the magnetic field of the outer wire 102. The active area 306 may be located within the inner antenna loop of the first inner wire 106. It is noted that the magnetic field may be weaker across the rest of the area of the antenna in the first state 300, due to destructive interference of the magnetic field in those regions, so these regions may be less effective for transmitting and/or receiving signals. To resolve this problem a second state is provided, as will be described in greater detail below.

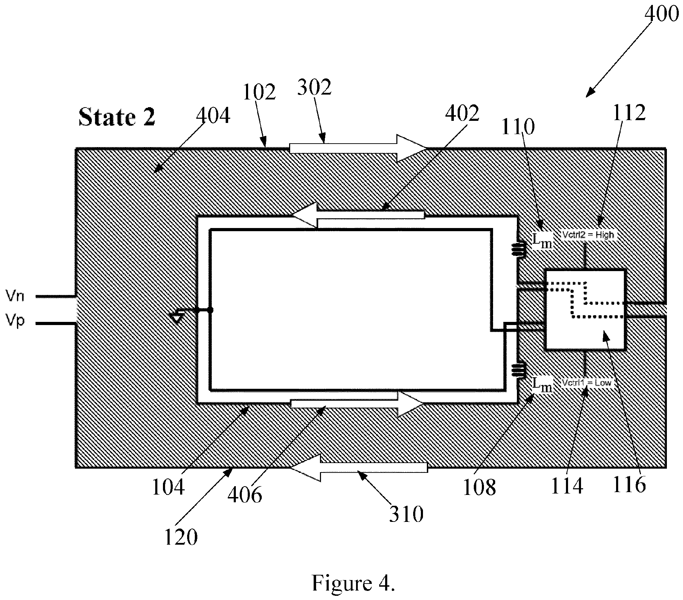

Figure 4 illustrates the communication antenna 100 in a second state 400 in accordance with an embodiment. The second state 400 may occur when the first control voltage 114 has the second value, which may be a *"low"* level voltage, and when the second control voltage 112 has the first value, which may be a *"high"* level voltage. In the second state 400, current may pass along the outer wire 102 in a first outer direction 302 to the switching circuit 116. As the second control voltage 112 has a *"high"* level voltage, the first pair 204 and second pair 206 will be switched on, see Fig. 2. The current may then pass around the second inner wire 104 in a second inner direction 402/406 and then the current may flow back into the switching circuit 116 and travel along the outer wire 120 in a second outer direction 310. It may be noted that, the first outer direction 302 and the second outer direction 310 are out of phase with the second inner direction 402/406, meaning that the current in the outer wire 102/120 is flowing in the opposite direction to the current in the second inner wire 104. As both wires have a current flowing through them, this may result in a magnetic field being produced across the second state 400. The magnetic field in the second state 400 can be used to transmit signals to other devices.

In the present embodiment, the magnetic field in the second state 400 may be strongest within the active area 404, due to this region having *"high"* constructive interference between the magnetic field of the second inner wire 106 and the magnetic field of the outer wire 102. The active area 404 may be located between the outer antenna loop of the outer wire 103/120 and the inner antenna loop of the second inner wire 104. It is noted that the magnetic field may be weaker across the rest of the area of the antenna in the second state 400, due to destructive interference of the magnetic field in those regions, so these regions may be less effective for transmitting and/or receiving signals.

In this embodiment, the communication antenna 100 switches between the first state 300 and the second state 400. As mentioned previously, by changing the value of the first control voltage 114 and the second control voltage 112, from a first value to a second value. The switching circuit 116 may do this rapidly which changes the region of the strongest magnetic field, so as to form a substantially uniform magnetic field across the communication antenna 100. This may lead to a communication antenna 100, with fewer weak field regions, allowing the communication antenna 100 to transmit signals to external devices with a greater effective area. The communication antenna 100 may be used in wireless charging units that need to communicate with phones, and with a stronger and substantially uniform magnetic field across the antenna, this may mean faster charging times.

Accordingly, there has been described a communication antenna comprising an inner antenna loop extending within a plane, configured to allow a current to flow along a first inner wire and a second inner wire. The communication antenna also comprises, an outer antenna loop extending around the inner antenna loop within the plane, configured to allow a current to flow along an outer wire. The communication antenna further comprises, a plurality of transistors configured to be controlled by a first control voltage and a second control voltage selectively to switch between, a first state which produces current flow in the first inner wire that is in phase with the current in the outer wire; and a second state which produces current flow in the second inner wire that is out of phase with the current in the outer wire. The plurality of transistors is coupled between the outer antenna loop and the inner antenna loop.

Although particular embodiments of the invention have been described, it will be appreciated that many modifications/additions and/or substitutions may be made within the scope of the claimed invention.

## Claims

1. A communication antenna comprising:
an inner antenna loop extending within a plane, configured to allow a current to flow along a first inner wire and a second inner wire;
an outer antenna loop extending around the inner antenna loop within the plane, configured to allow a current to flow along an outer wire; and
a plurality of transistors configured to be controlled by a first control voltage and a second control voltage selectively to switch between:
a first state configured to produce current flow in the first inner wire that is in phase with the current in the outer wire; and
a second state configured to produce current flow in the second inner wire that is out of phase with the current in the outer wire;
wherein the plurality of transistors is coupled between the outer antenna loop and the inner antenna loop.

2. The communication antenna of claim 1, wherein the plurality of transistors are arranged in pairs, wherein each pair comprises a first transistor is connected in series with a second transistor, wherein:
a first pair is configured to turn on during the second state, and wherein the first pair is coupled in series with a first input and a first output, and the second control voltage is coupled to a gate terminal of each transistor of the first pair;
a second pair is configured to turn on during the second state, and wherein the second pair is coupled in series with a second input and a second output, and the second control voltage is coupled to a gate terminal of each transistor of the second pair;
a third pair is configured to turn on during the first state, and wherein the third pair is coupled in series with a first input and a third output, and the first control voltage is coupled to a gate terminal of each transistor of the third pair; and
a fourth pair is configured to turn on during the first state, and wherein the fourth pair is coupled in series with a second input and a fourth output, and the first control voltage is coupled to a gate terminal of each transistor of the fourth pair.

3. The communication antenna of claim 2, wherein the second inner wire comprises a first inductor coupled to the first output and a second inductor coupled to the second output, for adjusting the inductance of the second inner wire in the second state, so it is the same as the inductance of the first inner wire in the first state.

4. The communication antenna of any preceding claim, wherein the first inner wire follows an opposite path around the inner antenna loop, to the second inner wire.

5. The communication antenna of any preceding claim, wherein the first control voltage switches between a first value in the first state and a second value in the second state, and wherein the second control voltage switches between said second value in the first state and said first value in the second state.

6. The communication antenna of claim 5, wherein the first value is for switching on the transistors of a given pair of transistors when applied to the gates of those transistors, and wherein the second value is for switching off the transistors of a given pair of transistors when applied to the gates of those transistors.

7. The communication antenna of any preceding claim, wherein in the first state a magnetic field within the inner antenna loop is stronger than a magnetic field between the outer antenna loop and inner antenna loop.

8. The communication antenna of claim 7, wherein in the second state the magnetic field between the outer antenna loop and the inner antenna loop is stronger than the magnetic field within the inner antenna loop.

9. The communication antenna of any preceding claim, wherein the plurality of transistors are negative-channel metal-oxide-semiconductor field effect transistors, NMOS.

10. The communication antenna of any preceding claim, wherein the inner antenna loop comprises at least one further inner antenna loop.

11. The communication antenna of any preceding claim, wherein the outer antenna loop comprises at least one further outer antenna loop.

12. A Near Field Communication, NFC, antenna, comprising the communication antenna of any preceding claim.

13. A wireless charging unit, comprising the communication antenna of any of claims 1 to 9.
